# FASCICULE DE BREVET EUROPEEN

(11) **EP 2 719 444 B1**
(45) Date de publication et mention de la délivrance du brevet: **15.07.2015**
(21) Numéro de dépôt: 13188139.3
(22) Date de dépôt: 10.10.2013
(51) Int. Cl.: B01D 53/86

(54) **Procédé de dénitrification catalytique de fumées de combustion**
Katalytisches Denitrifikationsverfahren für Verbrennungsabgase
Method for catalytic denitrification of combustion fumes

(30) Priorité: 12.10.2012 FR 1259772
(43) Date de publication de la demande: 16.04.2014
(73) Titulaire: LAB SA, 69007 Lyon (FR)
(72) Inventeur: Siret, Bernard, 69200 VENISSIEUX (FR); Tabaries, Frank, 83430 Saint Mandrier sur Mer (FR)
(74) Mandataire: Grand, Guillaume

(56) Documents cités:
- EP-A1- 2 465 598
- EP-A2- 0 136 966
- EP-A2- 0 385 958
- DE-A1- 19 612 240
- US-A- 4 044 102
- US-A- 4 070 305

## Description

La présente invention concerne un procédé de dénitrification de fumées de combustion par voie catalytique.

Lors de la combustion de matières, telles que le charbon ou le fuel par exemple, en vue de produire de l'énergie, ou bien lors de l'incinération de déchets, les fumées issues de ces combustions contiennent une proportion appréciable d'oxydes d'azote et ne peuvent être rejetées à l'atmosphère sans traitement.

Lors de la combustion, d'autres polluants, en particulier les gaz acides comme l'acide chlorhydrique ou le dioxyde de soufre, sont émis, ainsi que des poussières et des particules solides. D'une manière généralisée, les oxydes d'azote doivent être éliminés et plusieurs technologies sont disponibles et bien acceptées industriellement.

Tout d'abord, on peut agir au niveau de la combustion proprement dite. Dans ce cas, des brûleurs dits « bas-NOx » peuvent alors être utilisés dans le cas de combustion du charbon ou du fuel, ou bien on peut modifier l'excès d'air, ou son étagement, de façon à ce que, dans les zones très chaudes, la formation des oxydes d'azote, à partir de l'azote de l'air, soit minimisée. Il a été également proposé d'enrichir l'atmosphère de combustion en oxygène ou de recycler du dioxyde de carbone pour accomplir cet effet. Cette approche est limitée dans son efficacité et se révèle de plus peu commode à mettre en oeuvre dans le cadre de l'incinération de déchets. En outre, cette solution ne peut aucunement suffire à amener la teneur en oxydes d'azote dans les fumées de combustion en-deçà de 150 mg/Nm³ d'oxydes d'azote.

Une seconde approche consiste à injecter un réactif, usuellement de l'ammoniac ou de l'urée, dans une zone particulière de la combustion. Le réactif se décompose alors et les radicaux générés réagissent pour empêcher la formation des oxydes d'azote ou détruire ceux déjà formés. Là encore, cette solution connaît des limites et il est difficile de dépasser des rendements de destruction de plus de 70%, sauf à consentir une fuite d'ammoniac dépassant la dizaine de milligrammes par Nm³. Là encore, pour le cas particulier de l'incinération de déchets, on ne peut pas obtenir beaucoup mieux que 120 mg/Nm³ d'oxydes d'azote sans avoir une fuite d'ammoniac importante. Cette solution, dite SNCR (acronyme de « Selective Non Catalytic Reduction ») n'est donc plus suffisante pour répondre aux besoins des unités modernes.

Traditionnellement, la technique suivie quand on a besoin d'obtenir des teneurs d'oxydes d'azote inférieures à 80 mg/Nm³ consiste à recourir à une dénitrification dite SCR (acronyme de « Selective Catalytic Reduction »). On fait réagir les oxydes d'azote avec un réactif approprié sur un catalyseur maintenu à une température relativement élevée. Le réactif de dénitrification employé est typiquement l'ammoniac ou bien encore l'urée. Si cette technique est maintenant bien maîtrisée, certaines contraintes et limitations, comme l'existence de poisons, tels que des oxydes alcalins, du phosphore, de l'arsenic, qui peuvent se fixer sur les sites actifs du catalyseur, et comme l'existence de composés, tels que des sulfates et hydrogénosulfates d'ammonium, qui peuvent se déposer et bloquer les pores du catalyseur, conduisent à une perte progressive de l'activité du catalyseur. Cela oblige soit à remplacer le catalyseur purement et simplement, soit à procéder à sa régénération. Une telle régénération peut être de nature thermique, en élevant la température du catalyseur à l'aide de brûleurs, ou bien résulter d'un lavage. Dans les deux cas, l'unité catalytique est mise hors ligne, ce qui conduit à une indisponibilité de l'installation.

Il a été proposé, notamment par EP 1 576 999, de procéder à un compartimentage complet du catalyseur et de régénérer compartiment par compartiment, ce qui permet de conserver, globalement, l'installation en ligne pendant la régénération. Toutefois cette solution est coûteuse, de par le compartimentage, le nombre de registres et la complexité des circuits de fumées qui en résultent.

En pratique, les catalyseurs de SCR sont le plus souvent utilisés sous forme de catalyseurs structurés en nid d'abeille, en canaux ou en plaques, présentant un grand taux d'ouverture pour les fumées. Une telle structure donne une perte de charge faible et confère également une meilleure tolérance aux particules solides et poussières, ce qui s'obtient cependant au détriment du volume de catalyseur employé. Pour contourner cette limitation, on utilise parfois un catalyseur en granulés, mais une telle forme en granulés devient alors très sensible à l'encrassement et au blocage, les poussières s'accumulant entre les granulés. Enfin, on incorpore quelquefois le catalyseur, en tant que principe actif, directement à l'intérieur d'un média filtrant, par exemple dans des couches rigides ou semi-rigides, ou bien au sein d'un média semi-souple : dans ce cas, comme les particules sont retenues à l'extérieur, elles ne viennent pas bloquer le dispositif catalytique, mais cette approche ne permet pas de régénérer le catalyseur en ligne une fois qu'il est désactivé. De surcroît, le coût d'un tel média filtrant catalytique est élevé.

De son côté, DE-A-196 12 240 divulgue un procédé de dénitrification, dans lequel des fumées à traiter sont dénitrifiées en les envoyant dans un dépoussiéreur, après les avoir mélangées avec un catalyseur de dénitrification, sous forme pulvérulente, et avec de l'ammoniac ou de l'urée, qui sont introduits directement dans les fumées, en tant qu'ajout de matières fraîches. De plus, le catalyseur est recyclé par, successivement, récupération d'une fraction des solides collectés par le dépoussiéreur, réactivation de cette fraction dans une unité ad hoc alimentée en air chaud, et renvoi de la sortie de cette unité dans les fumées à traiter en amont du dépoussiéreur. Bien qu'un tel procédé semble prometteur, DE-A-196 12 240 est peu précis, voire muet, quant à certains paramètres indispensables pour sa mise en oeuvre. En outre, le cas où de l'urée fraîche est introduite dans les fumées à traiter est difficile, voire impossible à mettre en oeuvre eu égard aux températures élevées que nécessite l'utilisation d'urée, sauf à traiter des fumées particulièrement chaudes, ce qui est peu courant ou non rentable.

Le but de la présente invention est de proposer une dénitrification catalytique améliorée viable, conciliant efficacité, faible coût et possibilité de régénération en ligne.

A cet effet, l'invention a pour objet un procédé de dénitrification catalytique de fumées de combustion, tel que défini à la revendication 1.

Ainsi, l'invention repose sur l'utilisation simple, économique et efficace de, à la fois, un catalyseur de dénitrification SCR sous forme divisée, dont l'activité catalytique est maintenue en permanence par régénération continue à l'aide d'un réacteur de réactivation ad hoc, et d'urée, dont la décomposition est réalisée rapidement et efficacement dans le réacteur précité dans lequel l'urée est directement introduite, le cas échéant sous forme solide.

Des caractéristiques additionnelles avantageuses du procédé conforme à l'invention sont spécifiées aux revendications dépendantes.

L'invention sera mieux comprise à la lecture de la description qui va suivre, donnée uniquement à titre d'exemple et faite en référence aux dessins sur lesquels :
- la figure 1 est une vue schématique d'une installation mettant en oeuvre le procédé conforme à l'invention ; et
- la figure 2 est un schéma détaillant une forme de réalisation possible d'une partie de l'installation de la figure 1.

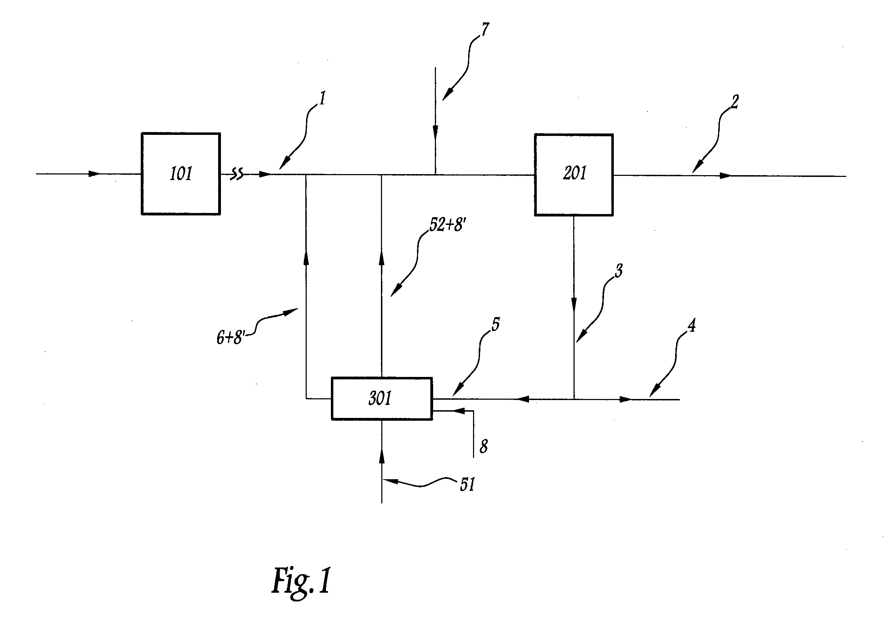

Sur la figure 1, des fumées de combustion à dénitrifier 1 proviennent d'un séparateur gaz-solides 101, qui est situé en amont sur le trajet de ces fumées, et sont envoyées dans un dépoussiéreur 201. Le séparateur gaz-solides 101 et le dépoussiéreur 201 sont d'une technologie connue en soi : chacun d'eux est par exemple constitué par un filtre à manches. En pratique, le séparateur gaz-solides 101 n'est pas nécessairement situé immédiatement en amont du dépoussiéreur 201, mais il est important de comprendre que les fumées à dénitrifier 1, entrant dans le dépoussiéreur 201, ne doivent plus contenir une quantité trop importante de poussières ou de solides, faute de quoi le catalyseur qui va être détaillé ci-après serait pollué par ces poussières et solides : typiquement, il est souhaitable que la teneur en poussières des fumées à dénitrifier 1 n'excède pas 5 mg/Nm³, cette valeur n'étant qu'indicative, sans être limitative de la présente invention.

Afin de dénitrifier les fumées 1, ces dernières sont mises en contact avec, à la fois, un réactif de dénitrification et un catalyseur de dénitrification, étant remarqué que, comme expliqué dans la partie introductive du présent document, un tel réactif de dénitrification et un tel catalyseur sont connus en soi.

Ainsi, la matière active d'un tel catalyseur est en général constituée d'oxyde métallique, de sels ou de métaux, et, pour des raisons de mise en oeuvre, ce principe actif est souvent déposé ou dispersé sur un support. A titre d'exemple, cette matière active est de l'oxyde de vanadium, des oxydes de fer, des oxydes de manganèse ou des composés à base de cuivre pour ne mentionner que quelques composés. Le support est souvent constitué d'oxyde de titane, d'une alumine, d'une zéolite, éventuellement additionné d'adjuvants utilisés pour leur mise en forme. Ainsi, des exemples courants de catalyseur sont à base d'oxyde de vanadium ou d'oxyde de tungstène, sur un substrat de type oxyde de titane (anatase).

Ceci étant posé, une des caractéristiques importantes de l'invention est qu'un tel catalyseur de dénitrification est utilisé sous forme divisée, de préférence sous forme pulvérulente, et est mélangé sous cette forme divisée, de préférence pulvérulente, aux fumées à dénitrifier 1. On entend par « sous forme divisée » le fait que le catalyseur se présente sous forme suffisamment fine pour pouvoir être véhiculé par les fumées à traiter 1. Comme montré à la figure 1, ce catalyseur sous forme divisée est apportée par un flux de recyclage 6, qui sera détaillé plus loin, et par un appoint de catalyseur frais 7, qui sont l'un et l'autre mélangés avec les fumées à dénitrifier 1 en amont du dépoussiéreur 201.

Quant au réactif de dénitrification, il est introduit dans les fumées à dénitrifier 1, en amont du dépoussiéreur 201, par un flux 8' qui, comme représenté sur la figure 1 et comme détaillé par la suite, est conjoint avec le flux précité 6.

En présence du réactif apporté par le flux 8' et au contact du catalyseur apporté par les flux 6 et 7, les fumées 1 sont dénitrifiées, c'est-à-dire que leur teneur en oxydes d'azote, notamment NO et NO₂, est réduite, et ce aussi bien dans la gaine véhiculant les fumées mélangées avec le réactif et le catalyseur, que dans le dépoussiéreur 201. On comprend ainsi que le dépoussiéreur 201 constitue un réacteur de dénitrification par voie catalytique.

A titre informatif et donc non limitatif, la concentration en catalyseur sous forme divisée est le plus souvent comprise entre 0,2 et 5 g/Nm³, mais des concentrations autres peuvent être utilisées, la seule contrainte étant que la quantité de catalyseur effectivement utilisée, en particulier dans le dépoussiéreur 201, soit suffisante pour assurer la dénitrification voulue.

Le dépoussiéreur 201 reçoit et collecte le catalyseur divisé, par exemple dans ses trémies s'il s'agit d'un filtre à manches, technologie qui convient particulièrement bien pour cette fonction.

En sortie du dépoussiéreur 201, les fumées dénitrifiées 2 sont évacuées tandis que les solides collectés, riches en catalyseur, sont extraits par un flux 3. Selon une des caractéristiques de l'invention, une partie 4 de ce flux de solides collectés 3 est extraite et évacuée, cette partie 4 constituant une purge du système. La partie majoritaire restante 5 du flux de solides collectés 3, qui constitue au moins 95%, de préférence plus de 98%, de ce dernier, est dirigée, à des fins de régénération, vers un réacteur de réactivation 301.

Le réacteur de réactivation 301 est d'une technologie connue en soi : il est par exemple constitué par un contacteur à double vis, un lit à jet bouillonnant ou un lit fluidisé.

En plus de la fraction 5 du flux de solides collectés 3, le réacteur de réactivation 301 reçoit un flux de régénération 51 constitué de gaz chauds qui présentent une température d'au moins 220°C, de préférence comprise entre 250 et 350°C.

Comme montré à la figure 1, le flux de solides 6 et un flux de gaz 52 sont extraits du réacteur de réactivation 301 et sont réintroduits dans les fumées à dénitrifier 1, en amont du dépoussiéreur 201. En pratique, les flux 6 et 52 peuvent être au moins partiellement confondus : ainsi, tout ou partie du flux de solides 6 peut être porté par le flux de gaz 52, jusque dans la gaine qui véhicule les fumées 1. Pour le cas où le flux de gaz 52 est extrait du réacteur de réactivation 301 séparément du flux de solides 6, ce flux de gaz 52 n'est pas nécessairement introduit au même endroit que le flux de solides 6 dans la gaine qui véhicule les fumées 1 : à titre de variante non représentée, ce flux 52 peut, par exemple, être introduit en amont du séparateur gaz-solides 101.

Comme évoqué plus haut, le réacteur de réactivation 301 permet la régénération thermique du catalyseur recyclé dans la fraction 5 du flux de solides collectés 3, le flux de gaz chauds 51 étant tel que la température des flux sortants 6 et 52 est portée à sensiblement 220°C ou davantage, faute de quoi la régénération du catalyseur recyclé est inefficace ou insuffisante. Ainsi, dans le réacteur de réactivation 301, les composés comme l'hydrogénosulfate d'ammonium et comme certains sels métalliques volatils sont désorbés du catalyseur recyclé, sous l'action de la chaleur. Comme la recirculation du catalyseur a lieu en permanence par le biais des flux 3, 5 et 6 et du réacteur de réactivation 301, ce catalyseur garde en permanence un état d'activité satisfaisant, contrairement à l'art antérieur dans lequel est utilisé un catalyseur statique souffrant typiquement d'une désactivation de l'ordre de 5% par an.

De surcroît, le réacteur de réactivation 301 apporte un autre bénéfice qui ne saurait être accessible à l'art antérieur dans lequel un catalyseur statique est utilisé. En effet, avec l'invention, le mouvement de la forme divisée du catalyseur induit un effet d'attrition qui détache les dépôts solides qui pourraient se former à la surface du catalyseur et qui, par effet purement mécanique de blocage du catalyseur, réduiraient son activité.

Selon une caractéristique de l'invention, de l'urée est utilisée en vue d'introduire dans les fumées à traiter 1 le réactif de dénitrification du flux 8'. Quand on utilise ainsi de l'urée, de l'ammoniac est généré, à la fois par décomposition thermique de l'urée puis au contact entre l'urée ou ses sous-produits de décomposition et le catalyseur divisé. L'utilisation d'urée présente plusieurs avantages en matière de sécurité et peut être préférée à l'ammoniac ou aux solutions ammoniacales. Toutefois, la décomposition de l'urée nécessite une température d'au moins 220-230°C afin de pouvoir se faire dans un temps assez court, typiquement inférieur à quelques secondes. Aussi, l'invention prévoit que de l'urée 8 est introduite dans le réacteur de réactivation 301 qui, du fait qu'il opère à une température plus élevée que celle des fumées à traiter 1 et que celle du dépoussiéreur 201, assure la décomposition rapide de cette urée 8. Les sous-produits, solides et/ou gazeux, résultant de la décomposition de l'urée 8 dans le réacteur de réactivation 301 et formant le flux précité 8', se retrouvent, en sortie de ce réacteur, mélangés respectivement avec le flux de solides 6 et/ou le flux de gaz 52, décrits plus haut en regard de la figure 1. Ces sous-produits 8' sont, conjointement avec les flux 6 et 52, incorporés aux fumées à dénitrifier 1 et servent donc de réactifs à la réaction de dénitrification des fumées 1, qui a lieu à la fois dans la gaine qui véhicule ces fumées et dans le dépoussiéreur 201. Cette introduction de l'urée 8 dans le réacteur 301 présente un intérêt renforcé quand la température à laquelle opère le dépoussiéreur 201 est inférieure à 220-230°C.

De manière avantageuse, l'urée 8 peut être introduite dans le réacteur de réactivation 301 sous forme solide : le brassage continu qui a lieu dans ce réacteur favorise la décomposition de l'urée et évite aussi les problèmes de dépôts ou constructions qu'on peut avoir quand une solution d'urée est pulvérisée dans une gaine.

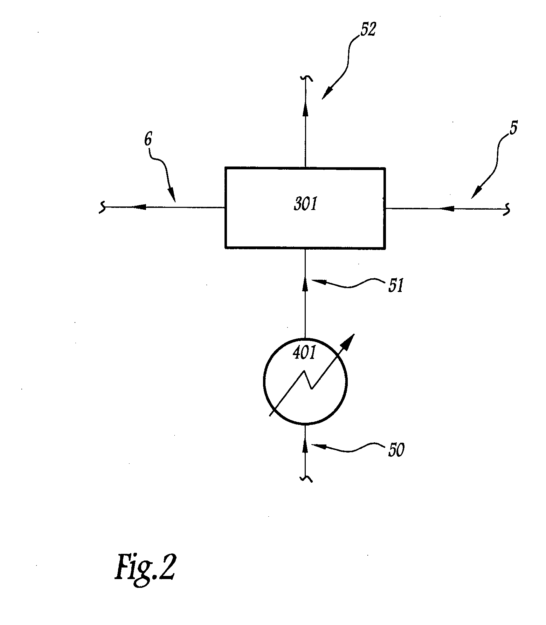

Comme indiqué plus haut, le flux de gaz chauds 51 doit avoir une température d'au moins 220°C, de préférence comprise entre 250 et 350°C. Ce flux de gaz chauds peut être constitué de vapeur d'eau sèche, autrement dit de vapeur surchauffée, ou d'air chaud ou bien encore de fumées propres, notamment extraites en aval du dépoussiéreur 201. En règle générale, de telles fumées propres ou bien de la vapeur d'eau basse pression commodément disponible ne sont pas naturellement à une température convenable. Et, compte tenu du fait que le réacteur de réactivation 301 opère à une pression sensiblement atmosphérique, même de la vapeur haute pression, après détente et avec les pertes thermiques inévitables associées, n'est pas disponible à une température convenable. C'est pourquoi, comme illustré par la figure 2, une disposition optionnelle de l'invention, qui est utile pour ces cas, prévoit qu'un réchauffeur 401 est inclus en amont du réacteur de réactivation 301, sur le trajet du flux de gaz chauds 51 : ainsi, ce flux de gaz chauds 51 est réalisé à partir d'un flux gazeux 50, par exemple constitué de vapeur d'eau sèche, d'air ou de fumées propres, la température de ce flux gazeux 50 étant élevée jusqu'au niveau requis d'au moins 220°C, de préférence entre 250 et 350°C, par le réchauffeur 401. Ce réchauffeur 401 est d'une technologie connue en soi et est, par exemple, constitué par une batterie électrique.

Dans le prolongement des considérations qui précèdent, on notera que, dans la mesure où le flux de gaz chauds 51 est faible en débit par rapport à celui des fumées 1, la consommation énergétique liée à l'utilisation du réchauffeur 401 reste faible au regard des avantages offerts. Le flux de gaz chauds 51 étant déterminé de façon à ce que le réacteur de réactivation 301 opère à une température d'au moins 220°C, une certaine liberté existe quant au couple débit/température de ce flux de gaz chauds 51. Par exemple, si on considère un flux de 100 000 Nm³/h de fumées à traiter 1, avec un débit de recyclage de catalyseur de 100 kg/h, un flux 51 de 250 kg/h de vapeur ou d'air chauffé à 300°C suffit pour assurer une température de plus de 250°C pourles flux 6 et 52 sortant du réacteur de réactivation 301. Pour faire un tel flux 51 d'air chauffé à 300°C, on réchauffe le flux 50 de 250kg/h d'air avec environ 20 kW.

Quel que soit son mode de mise en oeuvre, le procédé conforme à l'invention offre donc un moyen simple, économique et efficace d'utiliser un catalyseur de dénitrification SCR sous forme divisée et de maintenir son activité par régénération continue, en permanence. L'utilisation du catalyseur sous forme divisée permet, dans la mesure où le trajet moyen des molécules entre les fumées et le catalyseur est beaucoup plus réduit que dans un catalyseur classique en nid d'abeille ou en plaques, d'utiliser des volumes de catalyseur moindres. De même, le catalyseur étant sous forme divisée, la concentration en matière catalytique active peut être plus grande que pour un catalyseur supporté classique, ce qui permet une utilisation à des températures plus basses. Ainsi, alors que les catalyseurs de SCR opèrent usuellement à des températures comprises entre 220 et 300°C, parfois plus, l'utilisation d'un catalyseur sous forme divisée et plus actif, conformément à l'invention, permet une exploitation du dépoussiéreur 201, aux fins de la dénitrification, à des températures moindres, typiquement comprises entre 140 et 200°C (étant entendu que rien ne s'oppose à ce que ce dépoussiéreur 201 opère à une température supérieure), sans pour autant compromettre l'utilisation d'urée puisque celle-ci est introduite dans le réacteur de réactivation 301 qui opère à une température suffisamment élevée pour décomposer l'urée 8.

En outre, comme bien expliqué plus haut, l'action du flux de gaz chauds 51 permet une régénération en permanence du catalyseur sous forme divisée. L'appoint 7 et la purge 4 permettent de remplacer et d'évacuer le catalyseur usé, et correspondent de facto à ce que serait, fonctionnellement parlant, un remplacement de couches de catalyseur non divisé, qui, dans une configuration de l'art antérieur, nécessite un arrêt de ligne. Un autre avantage de l'invention est que, en cas d'empoisonnement majeur du catalyseur utilisé, celui-ci peut être intégralement remplacé rapidement, ce qui n'est pas le cas lorsqu'on utilise des catalyseurs structurés.

Par ailleurs, en tenant compte des explications qui précèdent, on comprend que l'invention apporte d'autres avantages :
- l'invention permet d'utiliser un ensemble d'équipements simples et compacts, la nécessite de pulvériser une solution d'urée ou d'ammoniaque de manière homogène disparaissant ; ainsi, un réacteur unique, à savoir le réacteur 301, est utilisé pour la réactivation du catalyseur et pour la décomposition de l'urée ;
- de l'urée d'une qualité technique peut être utilisée, puisque le problème de constructions dans la gaine véhiculant les fumées et complètement supprimé ; ceci est un avantage économique important ; et
- par rapport aux solutions existantes proposant d'utiliser de l'urée en solution, la mise en solution et la pulvérisation sont évitées grâce à l'invention ; de l'urée sous forme solide, typiquement en grains, peut même être utilisée pour le flux 8.

Divers aménagements et variantes au procédé conforme à l'invention sont par ailleurs envisageables. Par exemple, de manière optionnelle et non représentée sur les figures, un analyseur de dioxyde de souffre et d'acide chlorhydrique peut être prévu en amont du dépoussiéreur 201.

## Revendications

1. Procédé de dénitrification catalytique de fumées de combustion, dans lequel :
- des fumées à traiter (1), qui sont préalablement dépoussiérées, sont dénitrifiées en les mélangeant à un réactif de dénitrification (8') et à un catalyseur de dénitrification sous forme divisée (6, 7) puis en les introduisant dans un dépoussiéreur (201),
- de l'urée (8), un flux de gaz chauds (51), qui présente une température d'au moins 220°C, et une fraction (5) du flux des solides (3) collectés par le dépoussiéreur (201), qui en constitue au moins 95%, sont introduits dans un réacteur de réactivation (301), et
- les sous-produits (8'), qui résultent de la décomposition de l'urée (8) dans le réacteur de réactivation (301) et qui constituent ledit réactif de dénitrification (8'), sont, conjointement avec un flux de solides (6) issus du réacteur de réactivation (301), recyclés en étant incorporés aux fumées à traiter (1), en amont du dépoussiéreur (201).

2. Procédé selon la revendication 1, dans lequel l'urée (8) introduite au réacteur de réactivation (301) est sous forme solide.

3. Procédé selon l'une des revendications 1 ou 2, dans lequel la température du flux de gaz chauds (51) est comprise entre 250 et 350°C.

4. Procédé selon l'une quelconque des revendications précédentes, dans lequel le réacteur de réactivation (301) opère à une température plus élevée que celle des fumées à traiter (1) et que celle du dépoussiéreur (201).

5. Procédé selon l'une quelconque des revendications précédentes, dans lequel le flux de gaz chauds (51) est constitué de vapeur d'eau sèche.

6. Procédé selon l'une quelconque des revendications 1 à 4, dans lequel le flux de gaz chauds (51) est constitué d'air.

7. Procédé selon l'une quelconque des revendications 1 à 4, dans lequel le flux de gaz chauds (51) est constitué de fumées extraites en aval du dépoussiéreur (201).

8. Procédé selon l'une quelconque des revendications précédentes, dans lequel le flux de gaz chauds (51) est, avant d'être introduit au réacteur de réactivation (301), porté à une température d'au moins 220°C par un réchauffeur (401).

9. Procédé selon la revendication 8, dans lequel le réchauffeur (401) est une batterie électrique.

10. Procédé selon l'une quelconque des revendications précédentes, dans lequel la température du flux de solides (6) issus du réacteur de réactivation (301) est au minimum de 220°C.

11. Procédé selon l'une quelconque des revendications précédentes, dans lequel tout ou partie du flux de solides (6) issus du réacteur de réactivation (301) est retourné jusqu'aux fumées à traiter (1) en étant porté par un flux de gaz (52) sortant du réacteur de réactivation, ledit flux de solides (6) et ledit flux de gaz (52) étant mélangés avec les sous-produits (8'), respectivement solides et gazeux, résultant de la décomposition de l'urée (8) dans le réacteur de réactivation (301).

12. Procédé selon l'une quelconque des revendications précédentes, dans lequel le dépoussiéreur (201) est un filtre à manches.

13. Procédé selon l'une quelconque des revendications précédentes, dans lequel le réacteur de réactivation (301) est constitué par un contacteur à double vis.

## Patentansprüche

1. Verfahren zur katalytischen Denitrifikation von Verbrennungsgasen, bei dem
- die zu behandelnden Gase (1), die vorher entstaubt wurden, nitrifiziert werden, indem sie mit einem Denitrifikationsreagenz (8') und einem Denitrifikationskatalysator (6, 7) in geteilter Form gemischt werden und dann in einen Staubabscheider (201) geleitet werden,
- Harnstoff (8), ein Strom von heißen Gasen (51), der eine Temperatur von mindestens 220°C aufweist, und eine Fraktion (5) des Feststoffstroms (3), der von dem Staubabscheider (201) gesammelt wird und mindestens 95% davon bildet, in einen Reaktivierungsreaktor (301) eingeführt werden, und
- die Nebenprodukte (8'), die aus der Zersetzung des Harnstoffs (8) in dem Reaktivierungsreaktor (301) herrühren und die das Denitrifikationsreagenz (8') bilden, zusammen mit einem Feststoffstrom (6), der aus dem Reaktivierungsreaktor (301) stammt, wiederverwendet werden, indem sie den zu behandelnden Gasen (1) stromaufwärts zu dem Staubabscheider (201) beigemischt werden.

2. Verfahren nach Anspruch 1, bei dem der in den Reaktivierungsreaktor (301) eingeführte Harnstoff (8) in fester Form vorliegt.

3. Verfahren nach einem der Ansprüche 1 oder 2, bei dem die Temperatur des Stroms aus heißen Gasen (51) zwischen 250 und 350°C liegt.

4. Verfahren nach einem beliebigen der vorhergehenden Ansprüche, bei dem der Reaktivierungsreaktor (301) bei einer höheren Temperatur arbeitet als die der zu behandelnden Gase und als die des Staubabscheiders (201).

5. Verfahren nach einem beliebigen der vorhergehenden Ansprüche, bei dem der Strom (51) aus heißen Gasen aus trockenem Dampf besteht.

6. Verfahren nach einem beliebigen der Ansprüche 1 bis 4, bei dem der Strom (51) aus heißen Gasen aus Luft besteht.

7. Verfahren nach einem beliebigen der Ansprüche 1 bis 4, bei dem der Strom (51) aus heißen Gasen aus Gasen besteht, die stromabwärts vom Staubabscheider (201) abgezogen werden.

8. Verfahren nach einem beliebigen der vorhergehenden Ansprüche, bei dem der Strom (51) aus heißen Gasen, bevor er in den Reaktivierungsreaktor (301) eingeführt wird, von einer Heizvorrichtung (401) auf eine Temperatur von mindestens 220°C gebracht wird.

9. Verfahren nach Anspruch 8, bei dem die Heizvorrichtung (401) eine elektrische Batterie ist.

10. Verfahren nach einem beliebigen der vorhergehenden Ansprüche, bei dem die Temperatur des Feststoffstroms (6), der aus dem Reaktivierungsreaktor (301) stammt, mindestens 220°C beträgt.

11. Verfahren nach einem beliebigen der vorhergehenden Ansprüche, bei dem der gesamte Feststoffstrom oder ein Teil des Feststoffstroms (6), der aus dem Reaktivierungsreaktor (301) stammt, in die zu behandelnden Gase (1) zurückgeführt wird, wobei er von einem Gasstrom (52) mitgeführt wird, der den Reaktivierungsreaktor verlässt, wobei der Feststoffstrom (6) und der Gasstrom (52) mit den jeweils festen und gasförmigen Nebenprodukten (8') gemischt werden, die aus der Zersetzung des Harnstoffs (6) in dem Reaktivierungsreaktor (301) herrühren.

12. Verfahren nach einem beliebigen der vorhergehenden Ansprüche, bei dem der Staubabscheider (201) ein Beutelfilter ist.

13. Verfahren nach einem beliebigen der vorhergehenden Ansprüche, bei dem der Reaktivierungsreaktor (301) aus einem Doppelschneckenkontaktor besteht.

## Claims

1. Method for the catalytic denitrification of combustion fumes, in which:
• fumes to be treated (1), from which dust has previously been extracted, are denitrified by mixing them with a denitrification reagent (8') and a denitrification catalyst in divided form (6, 7), then introducing them into a dust collector (201),
• urea (8), a flow of hot gases (51), which has a temperature of at least 220°C, and a fraction (5) of the flow of the solids (3) collected by the dust collector (201) forming at least 95% thereof are introduced into a reactivation reactor (301), and
• the by-products (8'), which result from the decomposition of urea (8) in the reactivation reactor (301) and form said denitrification regent (8'), in combination with a flow of solids (6) discharged from the reaction reactor (301), are recycled by being combined with the fumes to be treated (1) upstream of the dust collector (201).

2. Method according to claim 1, in which the urea (8) introduced into the reactivation reactor (301) is in solid form.

3. Method according to one of claims 1 or 2, in which the temperature of the flow of hot gases (51) ranges between 250° and 350°C.

4. Method according to any one of the preceding claims, in which the reactivation reactor (301) operates at a higher temperature than that of the fumes to be treated (1) and than that of the dust collector (201).

5. Method according to any one of the preceding claims, in which the flow of hot gases (51) is formed from dry water vapour.

6. Method according to any one of claims 1 to 4, in which the flow of hot gases (51) is formed from air.

7. Method according to any one of claims 1 to 4, in which the flow of hot gases (51) is formed from fumes extracted downstream of the dust collector (201).

8. Method according to any one of the preceding claims, in which prior to it being inserted into the reactivation reactor (301) the flow of hot gases (51) is brought to a temperature of at least 220°C by a heater (401).

9. Method according to claim 8, in which the heater (401) is an electric battery.

10. Method according to any one of the preceding claims, in which the temperature of the flow of solids (6) discharged from the reaction reactor (301) is 220°C at minimum.

11. Method according to any one of the preceding claims, in which all or part of the flow of solids (6) discharged from the reactivation reactor (301) is returned to the fumes to be treated (1) by being carried by a gas flow (52) exiting from the reactivation reactor, wherein said flow of solids (6) and said gas flow (52) are mixed respectively with the solid and gaseous by-products (8') resulting from the decomposition of urea (8) in the reactivation reactor (301).

12. Method according to any one of the preceding claims, in which the dust collector (201) is a bag filter.

13. Method according to any one of the preceding claims, in which the reactivation reactor (301) is formed by a double-screw contactor.
